# EUROPEAN PATENT APPLICATION

(11) **EP 4 641 768 A1**
(43) Date of publication of application: **29.10.2025**
(21) Application number: 24216440.8
(22) Date of filing: 29.11.2024
(51) Int. Cl.: H01M 10/625, H01M 10/643, H01M 10/6555, H01M 10/6556, H01M 10/6557, H01M 50/213, H01M 50/249, H01M 50/264, H01M 50/291

(54) **BATTERY PACK**

(30) Priority: 25.04.2024 CN 202420889590 U
(71) Applicant: CALB Group Co., Ltd., Changzhou City, Jiangsu Province (CN)
(72) Inventor: YANG, Xulong, Changzhou City, Jiangsu Province (CN); WANG, Shuaifeng, Luoyang City, Henan Province (CN); LI, Ran, Changzhou City, Jiangsu Province (CN); JIANG, Hao, Changzhou City, Jiangsu Province (CN)
(74) Representative: Becker, Eberhard

(57) **Abstract**

A battery pack includes a battery box (100), cylindrical batteries (200), a spacing plate (300) and a pressing plate (400). The battery box (100) includes a bottom plate (110). The cylindrical battery (200) is disposed in the battery box (100) and having an axial direction parallel to a first direction (X) of the bottom plate (110). A first end surface is perpendicular to a first direction (X). The spacing plate (300) has a contact surface facing towards the first end surface and perpendicular to the bottom plate. The pressing plate (400) is disposed on a side of the cylindrical battery (200) facing away from the bottom plate (110), wherein an orthogonal projection pattern of the pressing plate (400) partially overlaps with an orthogonal projection pattern of the spacing plate (300) on a reference plane parallel to the bottom plate (110).

## Description

### Technical Field

The present invention relates to the technical field of batteries, and particularly relates to a battery pack.

### Background Art

In the prior art design of the battery pack, part of the battery pack adopts a design in which the cylindrical batteries are laid in a lying manner, i.e., the axial direction of the cylindrical batteries is parallel to the bottom plate of the battery box, and the heat exchange plates are arranged on the bottom plate in a relatively perpendicular form. The side surface of the heat exchange plate faces towards one end surface of the cylindrical battery to achieve contact heat exchange, and the other end surface of the cylindrical battery facing away from the heat exchange plate is connected with a conductive bar. However, since the end face of the heat exchange plate facing towards the heat exchange plate is not connected to the conductive bar, the portion of the cylindrical battery adjacent to the end face is liable to generate a warpage facing away from the bottom plate under, for example, vibration conditions, resulting in a poor vertical modality of the battery pack.

### Summary of the Invention

A main object of the present invention is to overcome at least one of the above-mentioned disadvantages of the prior art and provide a battery pack in a better vertical modality.

In order to achieve the above purpose, the present invention adopts the following technical solution.

According to an aspect of the present invention, a battery pack is provided, including a battery box, cylindrical batteries, a spacing plate and a pressing plate; wherein the battery box includes a bottom plate; each of the cylindrical batteries is disposed in the battery box and has an axial direction parallel to a first direction of the bottom plate, wherein the cylindrical battery has a first end surface, a second end surface and a side surface; the first end surface and the second end surface are arranged at intervals in the first direction and respectively perpendicular to the first direction; the side surface is connected between the first end surface and the second end surface; the second end surface is connected to a conductive bar; the conductive bar is connected to electrode output ends of two adjacent cylindrical batteries; the partition has a contact surface facing towards the first end surface and perpendicular to the bottom plate; the pressing plate is disposed on a side of the cylindrical battery facing away from the bottom plate, wherein an orthogonal projection pattern of the pressing plate partially overlaps with an orthogonal projection pattern of the spacing plate on a reference plane parallel to the bottom plate.

From the above technical solution, it can be seen that the advantages and positive effects of the battery pack proposed by the present invention are as follows.

The battery pack proposed by the present invention adopts the arrangement of cylindrical batteries placed in a lying manner and the spacing plate placed in an upright manner. The contact surface of the spacing plate faces towards the first end surface of the cylindrical battery, and the second end surface of the cylindrical battery facing away from the spacing plate is connected to the conductive bar. On this basis, the battery pack is provided with a pressing plate on a side of the cylindrical battery facing away from the bottom plate. The orthogonal projection pattern of the pressing plate partially overlaps with the orthogonal projection pattern of the spacing plate on a reference plane parallel to the bottom plate for constraining a region of the cylindrical battery adjacent to the first end surface. By means of the above-mentioned structural design, in the present invention, the cylindrical battery can be constrained by the pressing plate to avoid the warpage of the part of the cylindrical battery adjacent to the spacing plate and optimize the mode of the battery pack in the direction perpendicular to the bottom plate.

### Brief Description of the Drawings

Various objects, features and advantages of the present invention will become more apparent by considering the following detailed description of preferred embodiments of the present invention in conjunction with the accompanying drawings. The drawings are merely exemplary illustrations of the present invention and are not necessarily drawn to scale. In the drawings, like reference numerals refer to the same or similar parts throughout the several views. In the drawings,
Fig. 1 is a structurally perspective view showing a battery pack according to an exemplary embodiment.
Fig. 2 is a schematic enlarged view of a portion A in Fig. 1.
Fig. 3 is a structurally perspective view of a partial structure shown in Fig. 1.
Fig. 4 is a perspective exploded view of Fig. 3.
Fig. 5 is a partially top view of Fig. 3.
Fig. 6 is a structurally perspective view of a partial structure of the cylindrical battery shown in Fig. 1.
Fig. 7 is a schematic enlarged view of a portion B in Fig. 2.

### Description of Reference Numerals:

100, battery box;
110, bottom plate;
1101, module bottom plate;
200, cylindrical battery;
201, battery column;
202, battery set;
210, first end surface;
220, second end surface;
230, side surface;
300, spacing plate;
310, contact surface;
320, heat exchange passage
400, pressing plate;
410, connecting portion
420, restraining portion
500, conductive bar;
L1, length;
L2, length;
X, first direction;
Y, second direction;
Z, third direction.

### Detailed Description of the Invention

Typical examples embodying the features and advantages of the present invention will be described in detail in the following description. It should be understood that the present invention can have various modifications in different examples without departing from the scope of the present invention, and that the description and the drawings are intended for illustrative purposes in nature and are not intended to limit the present invention.

In the following description of different exemplary embodiments of the present invention, reference is made to the accompanying drawings, which form a part of the present invention, and in which different exemplary structures, systems, and steps that may implement aspects of the present invention are shown by way of example. It should be understood that other specific aspects of components, structures, exemplary devices, systems, and steps may be used, and structural and functional modifications may be made without departing from the scope of the present invention. Moreover, while the terms "over", "between", "within", and the like may be used in this description to describe various exemplary features and elements of the present invention, these terms are used herein for convenience only, e.g., in accordance with the direction of the examples described in the figures. Nothing in this description should be understood as requiring a specific three-dimensional direction of the structure to fall within the scope of the present invention.

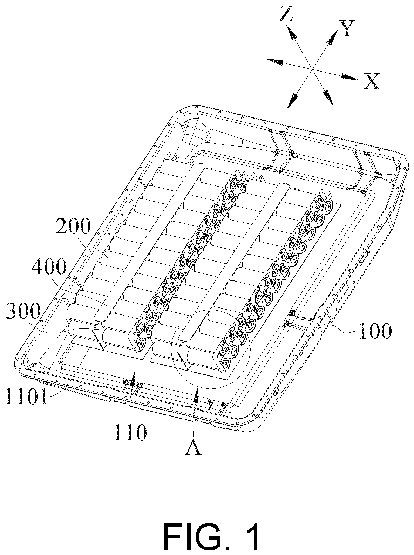

Referring to Fig. 1, there is representatively shown a schematic perspective view of a battery pack according to the present invention. In this exemplary embodiment, the battery pack proposed by the present invention is described by taking a battery applied to a vehicle as an example. It will be readily understood by those skilled in the art that in order to apply the relevant design of the present invention to other types of battery devices, various modifications, additions, substitutions, deletions or other changes to the following specific embodiments are still within the scope of the principles of the battery pack proposed by the present invention.

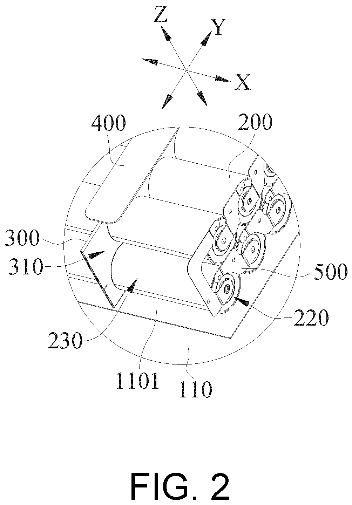

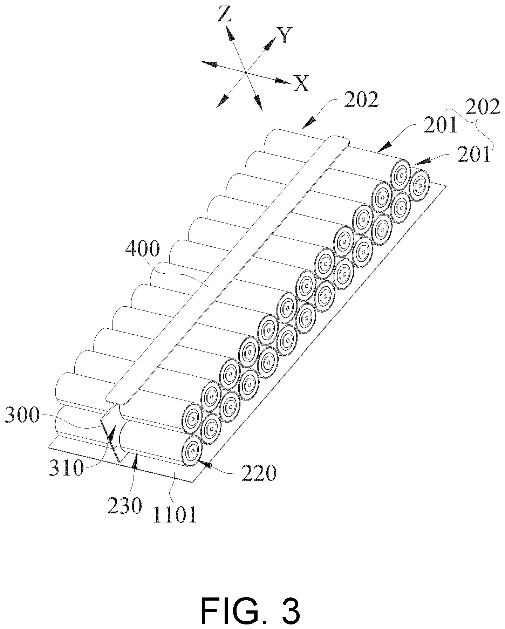

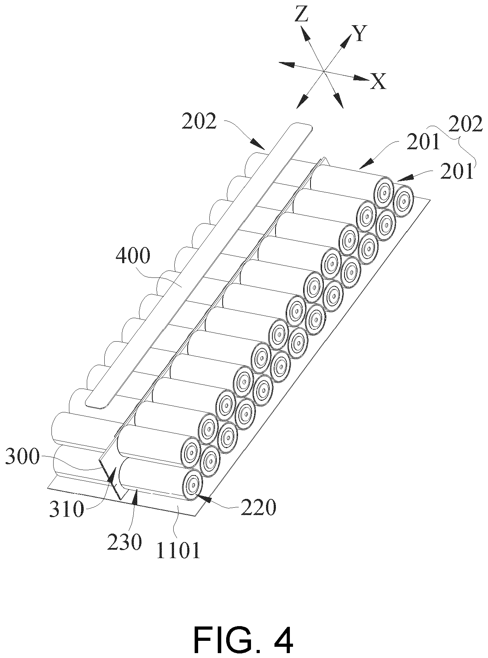

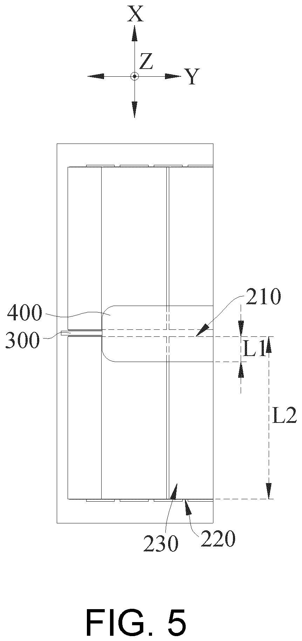

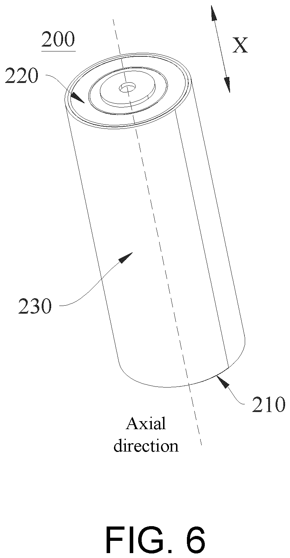

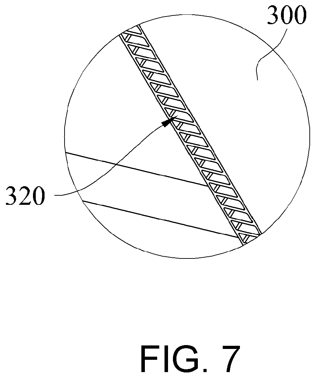

As shown in Fig. 1, in an embodiment of the present invention, the battery pack proposed by the present invention includes a battery box 100, a cylindrical battery 200, a spacing plate 300 and a pressing plate. Referring to Figs. 2-7, an enlarged view of portion A of Fig. 1 is representatively shown in Fig. 2. Fig. 3 representatively shows a schematic perspective view of a part of the structure shown in Fig. 1, in which an exploded structure of a spacing plate 300, a part of a cylindrical battery 200, and a pressing plate 400 is specifically shown. Fig. 4 representatively shows an exploded perspective view of Fig. 3. Fig. 5 representatively shows a partial top view of Fig. 3. A structurally perspective view of the cylindrical battery 200 shown in Fig. 1 is representatively shown in Fig. 6. Fig. 7 representatively shows a schematic enlarged view of the portion B in Fig. 2. Hereinafter, the structure, connection mode and functional relationship of each main component of the battery pack proposed by the present invention will be described in detail in conjunction with the above drawings.

As shown in Fig. 1 to Fig. 6, in an embodiment of the present invention, the battery box 100 includes a bottom plate 110. The cylindrical batteries 200 are disposed in the battery box 100. The cylindrical batteries 200 are arranged in a "lying" manner with respect to the bottom plate 110, i.e., the axial direction of the cylindrical batteries 200 is a first direction X parallel to the bottom plate 110. The cylindrical battery 200 has a first end surface 210, a second end surface 220, and a side surface 230. The first end surface 210 and the second end surface 220 are arranged at intervals in a first direction X. The side surface 230 is connected between the first end surface 210 and the second end surface 220. The second end surface 220 of the cylindrical battery 200 is connected with the conductive bar 500. The spacing plates 300 are arranged vertically with respect to the bottom plate 110, i.e., the spacing plates 300 are arranged in an "upright" manner with respect to the bottom plate 110. Specifically, the spacing plate 300 has a contact surface 310 facing towards the first end surface 210 and perpendicular to the bottom plate 110. The pressing plate 400 is disposed on a side of the cylindrical battery 200 facing away from the bottom plate 110 and arranged corresponding to a region of the side surface 230 adjacent to the first end surface 210. The pressing plate 400 is adapted to restrain the region of the cylindrical battery 200 adjacent to the first end surface 210 from being warped away from the bottom plate 110. By means of the above-mentioned structural design, in the present invention, the cylindrical battery 200 can be constrained by the pressing plate 400 to avoid the warpage of the part of the cylindrical battery 200 adjacent to the spacing plate 300 and optimize the mode of the battery pack in the direction perpendicular to the bottom plate 110.

As shown in Figs. 3 to 5, in an embodiment of the present invention, at least two cylindrical batteries 200 are arranged to form a battery column 201 along a second direction Y. The second direction Y is parallel to the bottom plate 110 and parallel to the contact surface 310 of the spacing plate 300. The first end surfaces 210 of each of the cylindrical batteries 200 belonging to the same battery column 201 simultaneously face a contact surface 310 of the spacing plate 300. On this basis, the pressing plate 400 may be elongated and extend along the second direction Y, namely, the length direction of the pressing plate 400 is the second direction Y. That is, each of the cylindrical batteries 200 belonging to the same battery column 201 is arranged along the length direction of the pressing plate 400. Here, the pressing plate 400 may simultaneously restrain each cylindrical battery 200 belonging to the same battery column 201. By the above-mentioned structural design, the present invention can make full use of the inner space of the battery box 100 to arrange the cylindrical battery 200, which is beneficial to improve the energy density of the battery pack. On this basis, the constraint on at least two cylindrical batteries 200 contained in a battery column 201 is achieved by the pressing plate 400 simultaneously, which is beneficial to reduce the number of parts and simplify the structural complexity. In some embodiments, for each cylindrical battery 200 belonging to one battery column 201, at least two pressing plates 400 may also be arranged for constraint, and each pressing plate 400 constrains at least one cylindrical battery 200, without being limited to this embodiment.

As shown in Figs. 3 to 5, based on the structural design of the pressing plate 400 restraining each cylindrical battery 200 belonging to the same battery column 201 simultaneously, in an embodiment of the present invention, the battery columns 201 may be respectively disposed on both sides of the spacing plate 300 in the first direction X. In other words, for two battery columns 201 that are adjacent in the first direction X, the cylindrical batteries 200 of the two are arranged with their respective first end surfaces 210 facing each other (i.e., with their respective second end surfaces 220 facing away from each other). The first end surfaces 210 of the cylindrical batteries 200 of the two respectively face towards the two contact surfaces 310 on both sides of the spacing plate 300. On this basis, the pressing plate 400 may simultaneously restrain the two battery columns 201 on both sides of the spacing plate 300. By the above-mentioned structural design, the spacing plate 300 can be used in the present invention to support and fix two battery columns 201 arranged in the first direction X. On this basis, the cylindrical batteries 200 at both sides of the spacing plate 300 are constrained by the pressing plate 400 simultaneously, which is beneficial to further reduce the number of parts and further simplify the structural complexity. Further, when the spacing plate 300 is a heat exchange plate, the heat exchange between two battery columns 201 arranged in the first direction X can also be simultaneously performed. In some embodiments, with regard to the cylindrical batteries 200 respectively located at both sides of the spacing plate 300 in the first direction X, the present invention may also respectively provide a pressing plate 400 for restraint, which is not limited to this embodiment.

As shown in Fig. 5, based on the structural design that the pressing plate 400 simultaneously constrains the two battery columns 201 at both sides of the spacing plate 300, in an embodiment of the present invention, the pressing plate 400 may have a flat plate structure. The pressing plate 400 spans a side of the spacing plate 300 facing away from the bottom plate 110 along the first direction X, and two side edge portions of the pressing plate 400 in the first direction X respectively constrain the cylindrical batteries 200 at the both sides of the spacing plate 300. In some embodiments, the pressing plate 400 may also include a connecting portion 410 connected to the spacing plate 300, two restraining portions 420 connected to both sides of the connecting portion 410 in the first direction X, respectively. The two restraining portions 420 restrain the two battery columns 201 on both sides of the spacing plate 300, respectively. The restraining portions 420 partially overlaps with the projection of the circumferential surface of the cylindrical battery 200, thereby preventing the cylindrical battery from upwarped. In addition, a portion of the pressing plate 400 that spans the spacing plate 300 may be adhesively fixed to the spacing plate 300 via an adhesive layer. By the above-mentioned structural design, the present invention can connect the pressing plate 400 and the spacing plate 300 by the connecting portion 410, facilitating the arrangement of the pressing plate 400 and achieving the constraint on the cylindrical battery 200. In addition, after the pressing plate 400 and the spacing plate 300 are fixedly connected, both the spacing plate 300 and the pressing plate 400 may be used to cooperatively limit the cylindrical battery 200. That is to say, the pressing plate 400 may be used to force the spacing plate 300, which is more conducive to the modality. Further, when the spacing plate 300 is a heat exchange plate, and the pressing plate 400 can perform a certain heat transfer function, the heat transfer efficiency can be improved to a certain extent. In some embodiments, the pressing plate 400 may be fixed relative to the battery box 100 or other structure in other manners, so as to position the pressing plate 400 relative to the cylindrical battery 200 to perform a restraining function. Thus, the pressing plate 400 may have other various non-flat plate-like structures, such as a "J"-shaped structure, etc. and is not limited to this embodiment.

As shown in Figs. 3 to 5, based on the structural design of the pressing plate 400 simultaneously constraining each cylindrical battery 200 belonging to the same battery column 201, in an embodiment of the present invention, at least two battery columns 201 are arranged in the battery set 202 along the third direction Z which is perpendicular to the bottom plate 110. On this basis, for one battery set 202, only one pressing plate 400 may be arranged correspondingly for the battery pack. The pressing plate 400 is located on a side facing away from the bottom plate 110 of each of the battery columns 201 of the same battery set 202 which is farthest away from the bottom plate 110. By the above-mentioned structural design, the present invention can further improve the energy density of the battery pack by using the design of the multi-layer battery column 201 to form the battery set 202. On this basis, only the battery column 201 of the uppermost layer is restrained by the pressing plate 400 so as to realize the restraint of the whole battery set 202. Specifically, for the battery columns 201 other than the uppermost layer, on the basis that the battery column 201 of the uppermost layer is restrained by the pressing plate 400, the restraint is realized by virtue of the arrangement of the adjacent battery columns 201 in the same battery set 202 in the third direction Z, which is beneficial to reduce the number of parts and simplify the structural complexity. In some embodiments, with regard to the battery columns 201 belonging to different layers of one battery set 202, the present invention may also respectively provide a pressing plate 400 for restraint, which is not limited to this embodiment.

In an embodiment of the present invention, the spacing plate 300 may be a heat exchange plate, which is in contact and heat exchange with the cylindrical battery 200 via the contact surface 310 (may be in direct contact or may be in indirect contact via other structures). By the above-mentioned structural design, the present invention can utilize the spacing plate 300 to contact and exchange heat with the cylindrical battery 200.

In an embodiment of the present invention, the spacing plate 300 may be a metal plate such as a steel plate, an aluminum plate, an aluminum alloy plate, a steel-aluminum composite plate, a copper plate, a copper alloy plate, or a high-molecular polymer plate. The spacing plate 300 can be a structural reinforcing plate, serving the function of reinforcing and/or heat insulation, and can also be a cold plate, including a temperature equalizing plate and a flow passage plate, etc., serving the function of heat conduction.

Based on the structural design that the spacing plate 300 is a heat exchange plate, in an embodiment of the present invention, the contact surface 310 of the spacing plate 300 may be planar.

As shown in Fig. 7, based on the structural design that the spacing plate 300 is a heat exchange plate, in an embodiment of the present invention, a heat exchange passage 320 is provided in the spacing plate 300. A heat exchange medium flows in the heat exchange passage 320. The heat exchange medium is a cooling medium. The internal pressure of the heat exchange passage 320 is 50 kPa-100 kPa. In other words, the battery pack proposed by the present invention employs a direct-cooling heat exchange system, namely, the spacing plate 300 is a direct-cooling spacing plate.

In an embodiment of the present invention, an adhesive layer may be provided between the cylindrical battery 200 and the pressing plate 400. By the above-mentioned structural design, the present invention can use the adhesive layer to achieve the adhesive fixation between the cylindrical battery 200 and the pressing plate 400, thereby further improving the structural rigidity of the battery pack. In some embodiments, there may be other forms of fixed connection between the cylindrical battery 200 and the pressing plate 400, or there may be no direct connection between the cylindrical battery 200 and the pressing plate 400, which are both not limiting in this embodiment.

As shown in Fig. 5, in an embodiment of the present invention, a reference plane is defined, which is parallel to the bottom plate 110. The orthogonal projection pattern of the pressing plate 400 at least partially overlaps with the orthogonal projection pattern of the cylindrical battery 200 on the reference plane. In the first direction X, the length Ll of the portion of the pressing plate 400 overlapping with the cylindrical battery 200 accounts for 0.01-0.5, for example, 0.01, 0.05, 0.1, 0.2, 0.3, 0.5, etc. of the length L2 of the cylindrical battery 200. By the above-mentioned structural design, the present invention can avoid that the pressing plate 400 overlaps with the cylindrical battery 200 too much to increase the volume and weight of the pressing plate 400, and also can avoid that the pressing plate 400 overlaps with the cylindrical battery 200 too little so that the restraint function thereof on the cylindrical battery 200 is not obvious. In some embodiments, the length Ll of the portion of the pressing plate 400 that overlaps with the cylindrical battery 200 may have a ratio of less than 0.01, or greater than 0.5, such as 0.009, 0.51, etc. in the length L2 of the cylindrical battery 200, and is not limited by this embodiment.

In an embodiment of the present invention, the ratio of the length of the pressing plate 400 to the thickness thereof may be 96-3000, such as 96, 200, 500, 1000, 3000, etc. By means of the above-mentioned structural design, the present invention can avoid the above-mentioned ratio being too large so that the pressing plate 400 is easy to break when subjected to a vibration working condition, and also can avoid the above-mentioned ratio being too small to be unfavorable to weight reduction and Z-direction space utilization rate improvement.

In an embodiment of the present invention, the thickness of the pressing plate may be 0.5 mm-4 mm, for example, 0.5 mm, 1 mm, 2.5 mm, 4 mm, or the like. By means of the above-mentioned structural design, the present invention can avoid that the thickness of the pressing plate 400 is too small so that the restraint capacity is insufficient, and also can avoid that the thickness of the pressing plate 400 is too large so that the space is occupied too much or the weight is too large. In some embodiments, the thickness of pressing plate 400 may also be less than 0.5 mm, or may be greater than 4 mm, such as 0.49 mm, 4.05 mm, etc. and is not limited by this embodiment.

In an embodiment of the present invention, the material of the pressing plate 400 may be a non-metallic material. Since the insulating layer at the R-angle structure between the end surface and the side surface 230 of the cylindrical battery 200 is thin, if the pressing plate 400 is a metal material, the risk of insulation failure may be increased. By the above-mentioned design, the risk of insulation failure can be reduced by the present invention. In some embodiments, the material of the pressing plate 400 may also be a metal material. In this case, an additional insulation design (different from an insulating layer on the surface of the battery) may be performed between the pressing plate 400 and the cylindrical battery 200. For example, when the adhesive layer is provided between the pressing plate 400 and the cylindrical battery 200, the adhesive layer may be made of an insulation adhesive material, which is not limited in this embodiment.

In an embodiment of the present invention, the first end surface 210 of the cylindrical battery 200 may be provided with an insulating layer. By the above-mentioned structural design, the present invention can ensure the insulating performance between the first end surface 210 and the spacing plate 300 by the insulating layer.

Based on the structural design that the first end surface 210 is provided with the insulating layer, in an embodiment of the present invention, the insulating layer may be an insulating sprayed layer. With the above-mentioned design, since the insulating sprayed layer has a greater surface roughness than that of other structural forms of insulating layers (such as insulating films), when the spacing plate 300 is bonded and fixed to the cylindrical battery 200, the present invention can further improve the bonding strength between the spacing plate 300 and the cylindrical battery 200 by using the design of the insulating sprayed layer.

As shown in Figs. 3 and 4, in an embodiment of the present invention, the second end surface 220 of the cylindrical battery 200 may be provided with an explosion proof valve. By the above-mentioned structural design, the present invention can avoid the problem that the spacing plate 300 blocks a pressure relief injection valve when the explosion proof valve is disposed on the first end surface 210.

In an embodiment of the present invention, the spacing plate 300 may be an extruded profile.

In an embodiment of the present invention, the cylindrical battery 200 may be a lithium iron battery. For example, the cathode active material of the cylindrical battery 200 may be lithium iron phosphate.

It should be noted that as an example of the embodiment shown in Fig. 1, when cylindrical batteries 200 are disposed on both sides of the spacing plate 300 in the first direction X, the spacing plate 300, the cylindrical batteries 200 on both sides and other related structures may together constitute a battery module. The battery module may be disposed on a module bottom plate 1101 and disposed on the bottom plate 110 of the battery box via the module bottom plate 1101. At this time, with regard to the relative arrangement relationship between each structure and the bottom plate 110 in this description, it can be correspondingly understood as the relative arrangement relationship between each structure and the module bottom plate 1101. By the above-mentioned structural design, the present invention can improve the integration degree of the battery module, which is beneficial to improve the assembly efficiency. It should be understood that in some embodiments, the battery pack may not be provided with the module bottom plate 1101, and the battery module may be provided directly on the bottom plate 110 of the battery box 100.

It should be noted here that the battery pack shown in the accompanying drawings and described in this description are only a few examples of many types of battery packs that can employ the principles of the present invention. It should be clearly understood that the principles of the present invention are by no means limited to any detail or any component of the battery pack shown in the drawings or described in this description.

In summary, the battery pack proposed by the present invention adopts the arrangement of cylindrical batteries 200 placed in a lying manner and the spacing plate 300 placed in an upright manner. The contact surface 310 of the spacing plate 300 faces towards the first end surface 210 of the cylindrical battery 200, and the second end surface 220 of the cylindrical battery 200 facing away from the spacing plate 300 is connected to the conductive bar 500. On this basis, the battery pack is provided with a pressing plate 400 on a side of the cylindrical battery 200 facing away from the bottom plate 110. The orthogonal projection pattern of the pressing plate 400 partially overlaps with the orthogonal projection pattern of the spacing plate 300 on a reference plane parallel to the bottom plate 110 for constraining a region of the cylindrical battery 200 adjacent to the first end surface 210. By means of the above-mentioned structural design, in the present invention, the cylindrical battery 200 can be constrained by the pressing plate 400 to avoid the warpage of the part of the cylindrical battery 200 adjacent to the spacing plate 300 and optimize the mode of the battery pack in the direction perpendicular to the bottom plate 110.

Exemplary embodiments of battery packs proposed by the present invention have been described and/or illustrated in detail above. However, the embodiments of the present invention are not limited to the particular embodiments described herein. Rather, the components and/or steps of each embodiment may be used independently and separately from the other components and/or steps described herein. Each component and/or each step of one embodiment may also be used in conjunction with other components and/or steps of other embodiments. In introducing elements/components/etc. described and/or illustrated herein, the terms "a," "an," and "the above-mentioned", etc. are used to indicate that one or more elements/components/etc. are present. The terms "comprising", "including", and "having" are used in an open-ended inclusive sense and mean that there may be additional elements/components/etc. in addition to the listed elements/components/etc. In addition, the terms "first" and "second" in the claims and the description are used only as labels, and are not intended to be numerical limitations on their objects.

## Claims

1. A battery pack, **characterized by** comprising:
a battery box (100) comprising a bottom plate (110);
cylindrical batteries (200) disposed in the battery box (100), wherein each of the cylindrical batteries (200) has an axial direction parallel to a first direction (X) of the bottom plate (110), the cylindrical battery (200) has a first end surface (210), a second end surface (220) and a side surface (230); the first end surface (210) and the second end surface (220) are arranged at intervals in the first direction (X) and respectively perpendicular to the first direction (X); the side surface (230) is connected between the first end surface (210) and the second end surface (220); the second end surface (220) is connected to a conductive bar (500); the conductive bar (500) is connected to electrode output ends of adjacent two of the cylindrical batteries (200);
a spacing plate (300) having a contact surface (310) facing towards the first end surface (210) and perpendicular to the bottom plate (110); and
a pressing plate (400) disposed on sides of the cylindrical batteries (200) facing away from the bottom plate (110), wherein an orthogonal projection pattern of the pressing plate (400) partially overlaps with an orthogonal projection pattern of the spacing plate (300) on a reference plane parallel to the bottom plate (110).

2. The battery pack according to claim 1, **characterized in that** at least two of the cylindrical batteries (200) are arranged to form a battery column (201) along a second direction (Y); the second direction (Y) is parallel to the bottom plate (110) and parallel to the contact surface (310); the first end surfaces (210) of each of the cylindrical batteries (200) belonging to the same battery column (201) simultaneously face the contact surface (310) of the spacing plate (300); wherein the pressing plate (400) is elongated and extends along the second direction (Y); and the pressing plate (400) simultaneously constrains each of the cylindrical batteries (200) belonging to the same battery column (201).

3. The battery pack according to claim 2, **characterized in that** the spacing plate (300) is provided with the battery columns (201) on both sides of the first direction (X); wherein the pressing plate (400) simultaneously constrains the two battery columns (201) on both sides of the spacing plate (300).

4. The battery pack according to claim 3, **characterized in that** the pressing plate (400) comprises a connecting portion (410) and two restraining portions (420); the connecting portion is connected to the spacing plate (300); the two restraining portions (420) are connected to both sides of the connecting portion (410) in the first direction (X); and the two restraining portions (420) restrain the two battery columns (201) on both sides of the spacing plate (300), respectively.

5. The battery pack according to claim 2, **characterized in that** at least two of the battery columns (201) are arranged to form a battery set (202) in a third direction (Z), the third direction (Z) is perpendicular to the bottom plate (110); wherein, for one of the battery sets (202), only one of the pressing plates (400) is arranged correspondingly to the battery pack; and the pressing plate (400) is located on a side facing away from the bottom plate (110) of each of the battery columns (201) of the same battery set (202) which is farthest away from the bottom plate (110).

6. The battery pack according to claim 1, **characterized in that** the spacing plate (300) is a heat exchange plate.

7. The battery pack according to claim 6, **characterized in that** the contact surface (310) of the spacing plate (300) is planar.

8. The battery pack according to claim 6, **characterized in that** a heat exchange passage (320) is provided in the spacing plate (300); a heat exchange medium flows in the heat exchange passage (320); the heat exchange medium is a coolant; and an internal pressure of the heat exchange passage (320) is 50 kPa-100 kPa.

9. The battery pack according to claim 1, **characterized in that** a length of a portion of the orthogonal projection pattern of the pressing plate (400) overlapping with the orthogonal projection pattern of the cylindrical battery (200) in the first direction (X) accounts for 0.01-0.5 of the length of the cylindrical battery (200).

10. The battery pack according to claim 1, **characterized in that**
a ratio of a length of the pressing plate (400) to a thickness of the pressing plate (400) is 96-3000; and/or
the thickness of the pressing plate (400) is 0.5 mm-4 mm.

11. The battery pack according to any one of claims 1-10, **characterized in that** the second end surface (220) of each of the cylindrical batteries (200) is provided with an explosion proof valve.

12. The battery pack according to any one of claims 1-10, **characterized in that** the cylindrical batteries (200) are lithium iron phosphate batteries.
